(19) Europäisches Patentamt
European Patent Office
Office européen des brevets

(11) EP 0 571 945 B1

(12) **EUROPEAN PATENT SPECIFICATION**

(45) Date of publication and mention of the grant of the patent:
**04.02.1998 Bulletin 1998/06**

(51) Int. Cl.[6]: **C08F 4/652**, C08F 210/16

(21) Application number: **93108417.2**

(22) Date of filing: **25.05.1993**

(54) **Catalyst for copolymerizing ethylene with alpha-olefin and process for producing ethylene-alpha-olefin copolymer using the catalyst**

Katalysator für Copolymerisation von Ethylen und Alpha-Olefin und Verfahren zur Herstellung eines Ethylen/Alpha-Olefin Copolymerisats mit diesem Katalysator

Catalyseur pour copolymériser l'éthylène avec une alpha-oléfine et procédé de préparation d'un copolymère éthylène/alpha-oléfine utilisant ce catalyseur

(84) Designated Contracting States:
**BE DE FR GB IT NL**

(30) Priority: **29.05.1992 JP 138152/92**
**29.05.1992 JP 138153/92**
**27.11.1992 JP 318125/92**

(43) Date of publication of application:
**01.12.1993 Bulletin 1993/48**

(73) Proprietor:
**SUMITOMO CHEMICAL COMPANY LIMITED**
**Osaka-shi, Osaka 541 (JP)**

(72) Inventors:
- **Sasaki, Toshio**
  **Ichihara-shi (JP)**
- **Shiraishi, Hiroyuki**
  **Sodegaura-shi, Chiba-ken (JP)**
- **Johoji, Hirofumi**
  **Ichihara-shi (JP)**
- **Katayama, Hiroaki**
  **Ichihara-shi (JP)**

(74) Representative:
**VOSSIUS & PARTNER**
**Postfach 86 07 67**
**81634 München (DE)**

(56) References cited:
**US-A- 3 394 156** **US-A- 4 042 610**

- **PATENT ABSTRACTS OF JAPAN vol. 7, no. 91 (C-162)15 April 1983 & JP-A-58 021 407 (SUMITOMO CHEMICAL CO. LTD.) 8 February 1983**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 571 945 B1

## Description

The present invention relates to a novel Ziegler catalyst and to a process for producing ethylene-$\alpha$-olefin copolymers using the catalyst. In more particular, it relates to a catalyst comprising a novel catalyst component and an organoaluminum compound and to a process for producing ethylene-$\alpha$-olefin copolymers using the catalyst. In still more particular, it relates to a catalyst and to a process for producing ethylene-$\alpha$-olefin copolymers which have a narrow composition distribution, have a high molecular weight, and are excellent in weather resistance, color development, transparency, corrosiveness and mechanical properties by using the catalyst.

Olefin copolymers are in a vast variety of uses, including film, laminates, electric wire covering, injection molded articles, and special molded articles. It is generally known that, to obtain products which are excellent in transparency, impact resistance and anti-blocking property in these uses, polymers which have narrow molecular weight distribution and composition distribution are preferably used. In the case of copolymers, particularly, as the content of copolymerized $\alpha$-olefin increases, the influences of molecular weight distribution and composition distribution exerted on the properties of the copolymer become greater. Accordingly, olefin copolymers which have narrow molecular weight distribution and composition distribution are eagerly waited for.

Among the methods for producing olefin copolymers, there are widely known a group of methods which use so-called Ziegler-Natta catalysts, which comprise a compound of a transistion metal of the groups IV to VI of the periodic table and an organometallic compound of the groups I to III.

As to Ziegler-type solid catalysts, there have been proposed catalysts comprising a transition metal compound, such as titanium tetrachloride, supported on a carrier, such as a magnesium compound (see for example Belgian Patent Application No. 759601, JP-B-47-46269 and JP-B-47-26383), and solid catalytic systems obtained by reducing a titanium compound with an organomagnesium compound, which include a solid catalyst component comprising a Grignard reagent and titanium tetrachloride or an alkoxy-containing titanium halide (see for example JP-A-46-4391, JP-B-47-40959 and JP-B-50-30102), and a solid catalyst component obtained by reacting a Grignard reagent and an alkoxy-containing titanium halide and treating the reaction product with titanium tetrachloride (see for example JP-B-57-24361 and JP-A-56-115302). These catalysts, however, all give copolymers which have a wide composition distribution and are unsatisfactory in transparency and mechanical properties.

On the other hand, a method is known for obtaining olefin copolymers having narrow molecular weight distribution and composition distribution which uses a catalyst formed from a vanadium-containing catalyst component and an organoaluminum compound catalyst component. This catalyst, however, though it gives ethylene-$\alpha$-olefin copolymers having a narrow composition distribution, has a low polymerisation activity at high temperatures and hence a low productivity and, further, raises the problems of color development, low weather resistance, and corrosiveness due to residual vanadium and chlorine, so that the copolymer must be thoroughly de-ashed to avoid these problems.

In order to solve such problems, several methods have been thus far proposed which use a catalytic system comprising a titanium compound or zirconium compound and an aluminum compound. Recently, in particular, a method has been proposed which uses a catalytic system comprising a titanium compound or zirconium compound and an aluminoxane (JP-T2-1-503788, JP-A-62-121708).

However, when the above-mentioned catalytic system is used in high temperature solution polymerization, the resulting copolymer has a low molecular weight and hence has properties rather unsatisfactory for practical use. Further, the catalytic system is not satisfactory as to the copolymerizability of $\alpha$-olefins and hence requires the presence of a larger amount of expensive $\alpha$-olefin in the polymerization system; this is economically disadvantageous.

As to the method of polymerising or copolymerizing olefins using a catalytic system comprising a compound having a titanium-nitrogen bond and an organoaluminum compound, there have been proposed a method which uses a catalytic system comprising a solid component formed by supporting a titanium amide compound on a magnesium halide and an organoaluminum compound (EP-0320169, IT-867243), one which uses a catalytic system comprising a diphenylamide compound of titanium and an organoaluminum compound (EP-0104374, JP-B-42-11646), one which uses a catalytic system comprising an titanium amide compound having an aryl substituent and an organoaluminum compound (JP-B-42-22691) and, further, one which uses a catalytic system comprising a titanium amide compound having a lower alkyl group, such as dimethylamidotitanium trichloride, and an organoaluminum compound [J. of Polym. Sci., Part A-1, 241, 6 (1968)].

However, the catalytic systems disclosed in the above literatures do not give satisfactory results when used for copolymerization of ethylene with an $\alpha$-olefin. That is, the methods disclosed in EP-0320169 and IT-867243 give ethylene-$\alpha$-olefin copolymers having a wide composition distribution, while the methods disclosed in EP-0104374, JP-B-42-11646, JP-B-42-22691 and J. of Polym. Sci. Part A-1, 241, 6 (1968) are not satisfactory in the activity and copolymerizability of the catalyst and the width of composition distribution of the copolymer obtained.

To solve the problems described above, the present inventors previously proposed a process for producing, in copolymerization of ethylene with an $\alpha$-olefin, a copolymer having a narrow composition distribution by using a catalytic system comprising a titanium compound represented by the formula $(R^1R^2N)_{4-(m+n)}TiX_mY_n$, wherein $R^1$ and $R^2$ are

each a saturated hydrocarbon group having 8-30 carbon atoms, X is a halogen, Y is an alkoxy group, and m and n are respectively numbers defined by the equations $1 \leqq m \leqq 3$ and $0 \leqq n \leqq 2$, provided that (m+n) is defined by the equation $1 \leqq (m+n) \leqq 3$, and an organoaluminum compound (JP-A-2-77412).

The above process, however, is not fully satisfactory in the activity of the catalyst, though it gives copolymers having substantially improved composition distribution.

In view of the above situation, the object of the present invention is to provide a catalytic system and to provide a process for producing ethylene-α-olefin copolymers by using the catalytic system with a high yield of polymer per unit weight of transition metal which copolymers have a narrow composition distribution and a high molecular weight and are excellent in weather resistance, color development, transparency, corrosiveness, and mechanical properties.

These objects have been achieved by providing a catalyst for copolymerising ethylene with an α-olefin which comprises the reaction product (A) of a titanium compound (A1) having at least one titanium-nitrogen bond with an organomagnesium compound (A2) and an organoaluminum compound (B), said reaction product (A) being in the form of a liquid, and a process for producing ethylene-α-olefin copolymers which uses the catalyst.

Fig. 1 is a diagram showing the melting behavior of the copolymer obtained in Example 1 determined with a differential scanning calorimeter (hereinafter abbreviated as DSC).

Fig. 2 is a diagram showing the melting behavior of the copolymer obtained in Example 3 determined with a DSC.

Fig. 3 is a diagram showing the melting behavior of the copolymer obtained in Comparative Example 1 determined with a DSC.

Fig. 4 is a diagram showing the melting behavior of the copolymer obtained in Example 7 determined with a DSC.

Fig. 5 is a diagram showing the melting behavior of the copolymer obtained in Example 8 determined with a DSC.

Fig. 6 is a flow chart to help understanding the present invention. The flow chart merely represents a typical example of the embodiments of the present invention, and the present invention is in no way limited thereto.

The present invention will now be described in detail below.

The titanium compound (A1) used in the present invention is a compound which has at least one titanium-nitrogen bond. It may be, for example, a titanium compound represented by the formula $(R^1R^2N)_{4-(m+n)}TiX_mY_n$, wherein $R^1$ and $R^2$ are each a hydrocarbon group having 1-30 carbon atoms and may be the same or different, X is a halogen, Y is an alkoxy group, m is a number defined by the equation $0 \leqq m \leqq 3$, and n is a number defined by the equation $0 \leqq n \leqq 3$, provided that (m+n) is defined by the equation $0 \leqq (m+n) \leqq 3$.

The halogen denoted by X in the above formula may be chlorine, bromine, or iodine, but is preferably chlorine from the viewpoint of catalytic activity. The group Y in the formula may be, for example, an alkoxy group having 1-20 carbon atoms, such as methoxy, ethoxy, propoxy, butoxy, or 2-ethylhexyloxy, but it is not particularly limited from the viewpoint of the property of the catalyst obtained.

When (m+n) in the formula is greater than 3, free $TiCl_4$ comes to exist. This unfavorably results in a wide composition distribution of the copolymer obtained.

Specific examples of such titanium compounds include dimethylaminotitanium trichloride, bis(dimethylamino)titanium dichloride, tris(dimethylamino)titanium chloride, tetrakis(dimethylamino)titanium, diethylaminotitanium trichloride, bis(diethylamino)titanium dichloride, tris(diethylamino)titanium chloride, tetrakis(diethylamino)titanium, diisopropylaminotitanium trichloride, bis(diisopropylamino)titanium dichloride, tris(diisopropylamino)titanium chloride, tetrakis(diisopropylamino)titanium, dipropylaminotitanium trichloride, bis(dipropylamino)titanium dichloride, tris(dipropylamino)titanium chloride, tetrakis(dipropylamino)titanium, diisobutylaminotitanium trichloride, bis(diisobutylamino)titanium dichloride, tris(diisobutylamino)titanium chloride, tetrakis(diisobutylamino)titanium, di-tert-butylaminotitanium trichloride, bis(di-tert-butylamino)titanium dichloride, tris(di-tert-butylamino)titanium chloride, tetrakis(di-tert-butylamino)titanium, dibutylaminotitanium trichloride, bis(dibutylamino)titanium dichloride, tris(dibutylamino)titanium chloride, tetrakis(dibutylamino)titanium, dihexylaminotitanium trichloride, bis(dihexylamino)titanium dichloride, tris(dihexylamino)titanium chloride, tetrakis(dihexylamino)titanium, dioctylaminotitanium trichloride, bis(dioctylamino)titanium dichloride, tris(dioctylamino)titanium chloride, tetrakis(dioctylamino)titanium, didecylaminotitanium trichloride, bis(didecylamino)titanium dichloride, tris(didecylamino)titanium chloride, tetrakis(didecylamino)titanium, dioctadecylaminotitanium trichloride, bis(dioctadecylamino)titanium dichloride, tris(dioctadecylamino)titanium chloride, tetrakis(dioctadecylamino)titanium, diphenylaminotitanium trichloride, bis(diphenylamino)titanium dichloride, tris(diphenylamino)titanium chloride, tetrakis(diphenylamino)titanium, ethoxy(dimethylamino)titanium dichloride, ethoxy(diethylamino)titanium dichloride, ethoxy(dipropylamino)titanium dichloride, ethoxy(diisopropylamino)titanium dichloride, ethoxy(diisobutylamino)titanium dichloride, ethoxy(di-tert-butylamino)titanium dichloride, ethoxy(dibutylamino)titanium dichloride, ethoxy(dihexylamino)titanium dichloride, ethoxy(dioctylamino)titanium dichloride, ethoxy(diphenylamino)titanium dichloride, propoxy(dimethylamino)titanium dichloride, propoxy(diethylamino)titanium dichloride, propoxy(dipropylamino)titanium dichloride, propoxy(diisopropylamino)titanium dichloride, propoxy(diisobutylamino)titanium dichloride, propoxy(ditert-butylamino)titanium dichloride, propoxy(dibutylamino)titanium dichloride, propoxy(dihexylamino)titanium dichloride, propoxy(dioctylamino)titanium dichloride, propoxy(diphenylamino)titanium dichloride, butoxy(dimethylamino)titanium dichloride, butoxy(diethylamino)titanium dichloride, butoxy(dipropylamino)titanium dichloride, butoxy(diisopropylamino)titanium dichloride, butoxy(diisobutylamino)titanium dichloride, butoxy(di-tert-butylamino)titanium dichloride, butoxy(dibutylamino)titanium dichloride, butoxy(dihexylamino)titanium dichloride, butoxy(dioctylamino)titanium dichloride, butoxy(diphenylamino)titanium dichloride, hexyloxy(dioctylamino) titanium dichloride, 2-ethylhexyloxy(dioctylamino)titanium dichloride, decyloxy(dioctylamino)titanium dichloride, ethoxy(didecylamino)titanium dichloride, hexyloxy(didecylamino)titanium dichloride, 2-ethylhexyloxy(didecylamino)titanium dichloride, decyloxy(didecylamino)titanium dichloride, ethoxy(dioctadecylamino)titanium dichloride, 2-ethylhexyloxy(dioctadecylamino)titanium dichloride, decyloxy(dioctadecylamino)titanium dichloride hexyloxybis(dioctylamino)titanium chloride, 2-ethylhexyloxy bis(dioctylamino)titanium chloride, decyloxybis(dioctylamino)titanium chloride, hexyloxybis(didecylamino)titanium chloride, 2-ethylhexyloxybis(didecylamino)titanium chloride, decyloxybis(didecylamino)titanium chloride, hexyloxybis(dioctadecylamino)titanium chloride, 2-ethylhexyloxybis(dioctadecylamino)titanium chloride, decyloxybis(dioctadecylamino)titanium chloride, methoxytris(dimethylamino)titanium, ethoxytris(dimethylamino)titanium, butoxytris(dimethylamino)titanium, hexyloxytris(dimethylamino)titanium, 2-ethylhexyloxytris(di-methylamino)titanium, decyloxytris(dimethylamino)titanium, methoxytris(diethylamino)titanium, ethoxytris(diethylamino)titanium, butoxytris(diethylamino)titanium, hexyloxytris(diethylamino)titanium, 2-ethylhexyloxytris(diethylamino)titanium, decyloxytris(diethylamino)titanium, methoxytris(dipropylamino)titanium, ethoxytris(dipropylamino)titanium, butoxytris(dipropylamino)titanium, hexyloxytris(dipropylamino)titanium, 2-ethylhexyloxytris(dipropylamino)titanium, decyloxytris(dipropylamino)titanium, methoxytris(dibutylamino)titanium, ethoxytris(dibutylamino)titanium, butoxytris(dibutylamino)titanium, hexyloxytris(dibutylamino)titanium, 2-ethylhexyloxytris(dibutylamino)titanium, decyloxytris(dibutylamino)titanium, methoxytris(dihexylamino)titanium, ethoxytris(dihexylamino)titanium, butoxytris(dihexylamino)titanium, hexyloxytris(dihexylamino)titanium, 2-ethylhexyloxytris(dihexylamino)titanium, decyloxytris(dihexylamino)titanium, methoxytris(diphenylamino)titanium, ethoxytris(diphenylamino)titanium, butoxytris(diphenylamino)titanium, hexyloxytris(diphenylamino)titanium, 2-ethylhexyloxytris(diphenylamino)titanium, decyloxytris(diphenylamino)titanium, methoxytris(dioctylamino)titanium, ethoxytris(dioctylamino)titanium, butoxytris(dioctylamino)titanium, hexyloxytris(dioctylamino)titanium, 2-ethylhexyloxytris(dioctylamino)titanium, decyloxytris(dioctylamino)titanium, methoxytris(didecylamino)titanium, ethoxytris(didecylamino)titanium, butoxytris(didecylamino)titanium, hexyloxytris(didecylamino)titanium, 2-ethylhexyloxytris(didecylamino)titanium, decyloxytris(didecylamino)titanium, methoxytris(dioctadecylamino)titanium, ethoxytris(dioctadecylamino)titanium, butoxytris(dioctadecylamino)titanium, hexyloxytris(dioctadecylamino)titanium, 2-ethylhexyloxytris(dioctadecylamino)titanium, and decyloxytris(dioctadecylamino)titanium.

Among such titanium compounds, those wherein $R^1$ and $R^2$ are each an aliphatic hydrocarbon group are preferred because they yield copolymers having a narrow composition distribution. Specific examples of such compounds include dimethylaminotitanium trichloride, bis(dimethylamino)titanium dichloride, tris(dimethylamino)titanium amino)titanium chloride, tetrakis(dimethylamino)titanium, diethylaminotitanium trichloride, bis(diethylamino)titanium dichloride, tris(diethylamino)titanium chloride, tetrakis(diethylamino)titanium, diisopropylaminotitanium trichloride, bis(diisopropylamino)titanium dichloride, tris(diisopropylamino)titanium chloride, tetrakis(diisopropylamino)titanium, dipropylaminotitanium trichloride, bis(dipropylamino)titanium dichloride, tris(dipropylamino)titanium chloride, tetrakis(dipropylamino)titanium, diisobutylaminotitanium trichloride, bis(diisobutylamino)titanium dichloride, tris(diisobutylamino)titanium chloride, tetrakis(diisobutylamino)titanium, di-tert-butylaminotitanium trichloride, bis(di-tert-butylamino)titanium dichloride, tris(di-tert-butylamino)titanium chloride, tetrakis(di-tert-butylamino)titanium, dibutylaminotitanium trichloride, bis(dibutylamino)titanium dichloride, tris(dibutylamino)titanium chloride, tetrakis(dibutylamino)titanium, dihexylaminotitanium trichloride, bis(dihexylamino)titanium dichloride, tris(dihexylamino)titanium chloride, tetrakis(dihexylamino)titanium, dioctylaminotitanium trichloride, bis(dioctylamino)titanium dichloride, tris(dioctylamino)titanium chloride, tetrakis(dioctylamino)titanium, didecylaminotitanium trichloride, bis(didecylamino)titanium dichloride, tris(didecylamino)titanium chloride, tetrakis(didecylamino)titanium, dioctadecylaminotitanium trichloride, bis(dioctadecylamino)titanium dichloride, tris(dioctadecylamino)titanium chloride, tetrakis(dioctadecylamino)titanium, ethoxy(dimethylamino)titanium dichloride, ethoxy(diethylamino)titanium dichloride, ethoxy(dipropylamino)titanium dichloride, ethoxy(diisopropylamino)titanium dichloride, ethoxy(diisobutylamino)titanium dichloride, ethoxy(di-tert-butylamino)titanium dichloride, ethoxy(dibutylamino)titanium dichloride, ethoxy(dihexylamino)titanium dichloride, ethoxy(dioctylamino)titanium dichloride, propoxy(dimethylamino)titanium dichloride, propoxy(diethylamino)titanium dichloride, propoxy(dipropylamino)titanium dichloride, propoxy(diisopropylamino)titanium dichloride, propoxy(diisobutylamino)titanium dichloride, propoxy(di-tert-butylamino)titanium dichloride, propoxy(dibutylamino)titanium dichloride, propoxy(dihexylamino)titanium dichloride, propoxy(dioctylamino)titanium dichloride, butoxy(dimethylamino)titanium dichloride, butoxy(diethylamino)titanium dichloride, butoxy(dipropylamino)titanium dichloride, butoxy(diisopropylamino)titanium dichloride, butoxy(diisobutylamino)titanium dichloride, butoxy(di-tert-butylamino)titanium dichloride, butoxy(dibutylamino)titanium dichloride, butoxy(dihexylamino)titanium dichloride, butoxy(dioctylamino)titanium dichloride, hexyloxy(dioctylamino)titanium dichloride, 2-ethylhexyloxy(dioctylamino)titanium dichloride, decyloxy(dioctylamino)titanium dichloride, ethoxy(didecylamino)titanium dichloride, hexyloxy(didecylamino)titanium dichloride, 2-ethylhexyloxy(didecylamino)titanium dichloride, decyloxy(didecylamino)titanium dichloride, ethoxy(dioctadecylamino)titanium dichloride, 2-ethylhexyloxy(dioctadecylamino)titanium dichloride, decyloxy(dioctadecylamino)titanium dichloride, hexyloxybis(dioctylamino)titanium chloride, 2-ethylhexyloxybis(dioctylamino)titanium chloride, decyloxybis(dioctylamino)titanium chloride, hexyloxybis(didecylamino)titanium chloride, 2-ethylhexyloxybis(didecylamino)titanium chloride, decyloxybis(didecylamino)titanium chloride, hexyloxybis(dioctadecylamino)titanium chloride, 2-ethylhexyloxybis(dioctadecylamino)titanium chloride, decyloxybis(dioctadecylamino)titanium chloride, methoxytris(dimethylamino)titanium, ethoxytris(dimethylamino)titanium, butoxytris(dimethylamino)titanium, hexyloxytris(dimethylamino)titanium, 2-ethylhexyloxytris(dimethylamino)titanium, decyloxytris(dimethylamino)titanium, methoxytris(diethylamino)titanium, ethoxytris(diethylamino)titanium, butoxytris(diethylamino)titanium, hexyloxytris(diethylamino)titanium, 2-ethylhexyloxytris(diethylamino)titanium, decyloxytris(diethylamino)titanium, methoxytris(dipropylamino)titanium, ethoxytris(dipropylamino)titanium, butoxytris(dipropylamino)titanium, hexyloxytris(dipropylamino)titanium, 2-ethylhexyloxytris(dipropylamino)titanium, decyloxytris(dipropylamino)titanium, methoxytris(dibutylamino)titanium, ethoxytris(dibutylamino)titanium, butoxytris(dibutylamino)titanium, hexyloxytris(dibutylamino)titanium, 2-ethylhexyloxytris(dibutylamino)titanium, decyloxytris(dibutylamino)titanium, methoxytris(dihexylamino)titanium, ethoxytris(dihexylamino)titanium, butoxytris(dihexylamino)titanium, hexyloxytris(dihexylamino)titanium, 2-ethylhexyloxytris(dihexylamino)titanium, decyloxytris(dihexylamino)titanium, methoxytris(dioctylamino)titanium, ethoxytris(dioctylamino)titanium, butoxytris(dioctylamino)titanium, hexyloxytris(dioctylamino)titanium, 2-ethylhexyloxytris(dioctylamino)titanium, decyloxytris(dioctylamino)titanium, methoxytris(didecylamino)titanium, ethoxytris(didecylamino)titanium, butoxytris(didecylamino)titanium, hexyloxytris(didecylamino)titanium, 2-ethylhexyloxytris(didecylamino)titanium, decyloxytris(didecylamino)titanium, methoxytris(dioctadecylamino)titanium, ethoxytris(dioctadecylamino)titanium, butoxytris(dioctadecylamino)titanium, hexyloxytris(dioctadecylamino)titanium, 2-ethylhexyloxytris(dioctadecylamino)titanium, and decyloxytris(dioctadecylamino)titanium.

Among such titanium compounds, when $R^1$ and $R^2$ are each an aliphatic hydrocarbon group, particularly those wherein the number of carbon atoms is 8-30 are preferred. Further, even when the number of carbon atoms is less than 8, those compounds wherein m is 0 or 2 are more preferred because they give copolymers having a narrower composition distribution. Specific examples of such compounds include bis(dimethylamino)titanium dichloride, tetrakis(dimethylamino)titanium, bis(diethylamino)titanium dichloride, tetrakis(diethylamino)titanium, bis(diisopropylamino)titanium dichloride, tetrakis(diisopropylamino)titanium, bis(dipropylamino)titanium dichloride, tetrakis(dipropylamino)titanium, bis(diisobutylamino)titanium dichloride, tetrakis(diisobutylamino)titanium, bis(di-tert-butylamino)titanium dichloride, tetrakis(di-tert-butylamino)titanium, bis(dibutylamino)titanium dichloride, tetrakis(dibutylamino)titanium, bis(dihexylamino)titanium dichloride, tetrakis(dihexylamino)titanium, dioctylaminotitanium trichloride, bis(dioctylamino)titanium dichloride, tris(dioctylamino)titanium chloride, tetrakis(dioctylamino)titanium, didecylaminotitanium trichloride, bis(didecylamino)titanium dichloride, tris(didecylamino)titanium chloride, tetrakis(didecylamino)titanium, dioctadecylaminotitanium trichloride, bis(dioctadecylamino)titanium dichloride, tris(dioctadecylamino)titanium chloride, tetrakis(dioctadecylamino)titanium, ethoxy(dimethylamino)titanium dichloride, ethoxy(diethylamino)titanium dichloride, ethoxy(dipropylamino)titanium dichloride, ethoxy(diisopropylamino)titanium dichloride, ethoxy(diisobutylamino)titanium dichloride, ethoxy(di-tert-butylamino)titanium dichloride, ethoxy(dibutylamino)titanium dichloride, ethoxy(dihexylamino)titanium dichloride, ethoxy(dioctylamino)titanium dichloride, propoxy(dimethylamino)titanium dichloride, propoxy(diethylamino)titanium dichloride, propoxy(dipropylamino)titanium dichloride, propoxy(diisopropylamino)titanium dichloride, propoxy(diisobutylamino)titanium dichloride, propoxy(di-tert-butylamino)titanium dichloride, propoxy(dibutylamino)titanium dichloride, propoxy(dihexylamino)titanium dichloride, propoxy(dioctylamino)titanium dichloride, butoxy(dimethylamino)titanium dichloride, butoxy(diethylamino)titanium dichloride, butoxy(dipropylamino)titanium dichloride, butoxy(diisopropylamino)titanium dichloride, butoxy(diisobutylamino)titanium dichloride, butoxy(di-tert-butylamino)titanium dichloride, butoxy(dibutylamino)titanium dichloride, butoxy(dihexylamino)titanium dichloride, butoxy(dioctylamino)titanium dichloride, hexyloxy(dioctylamino)titanium dichloride, 2-ethylhexyloxy(dioctylamino)titanium dichloride, decyloxy(dioctylamino)titanium dichloride, ethoxy(didecylamino)titanium dichloride, hexyloxy(didecylamino)titanium dichloride, 2-ethylhexyloxy(didecylamino)titanium dichloride, decyloxy(didecylamino)titanium dichloride, ethoxy(dioctadecylamino)titanium dichloride, 2-ethylhexyloxy(dioctadecylamino)titanium dichloride, decyloxy(dioctadecylamino)titanium dichloride, hexyloxybis(dioctylamino)titanium chloride, 2-ethylhexyloxybis(dioctylamino)titanium chloride, decyloxybis(dioctylamino)titanium chloride, hexyloxybis(didecylamino)titanium chloride, 2-ethylhexyloxybis(didecylamino)titanium chloride, decyloxybis(didecylamino)titanium chloride, hexyloxybis(dioctadecylamino)titanium chloride, 2-ethylhexyloxybis(dioctadecylamino)titanium chloride, decyloxybis(dioctadecylamino)titanium chloride, methoxytris(dimethylamino)titanium ethoxytris(dimethylamino)titanium, butoxytris(dimethylamino)titanium, hexyloxytris(dimethylamino)titanium 2-ethylhexyloxytris(dimethylamino)titanium, decyloxytris(dimethylamino)titanium, methoxytris(diethylamino)titanium, ethoxytris(diethylamino)titanium, butoxytris(diethylamino)titanium, hexyloxytris(diethylamino)titanium, 2-ethylhexyloxytris(diethylamino)titanium, decyloxytris(diethylamino)titanium, methoxytris(dipropylamino)titanium, ethoxytris(dipropylamino)titanium, butoxytris(dipropylamino)titanium, hexyloxytris(dipropylamino)titanium 2-ethylhexyloxytris(dipropylamino)titanium decyloxytris(dipropylamino)titanium, methoxytris(dibutylamino)titanium, ethoxytris(dibutylamino)titanium, butoxytris(dibutylamino)titanium, hexyloxytris(dibutylamino)titanium, 2-ethylhexyloxytris(dibutylamino)titanium, decyloxytris(dibutylamino)titanium, methoxytris(dihexylamino)titanium, ethoxytris(dihexylamino)titanium, butoxytris(dihexylamino)titanium, hexyloxytris(dihexylamino)titanium, 2-ethylhexyloxytris(dihexylamino)titanium, decyloxytris(dihexylamino)titanium, methoxytris(dioctylamino)titanium, ethoxytris(dioctylamino)titanium, butoxytris(dioctylamino)titanium, hexyloxytris(dioctylamino)titanium, 2-ethylhexyloxytris(dioctylamino)titanium, decyloxytris(dioctylamino)titanium, methoxytris(didecylamino)titanium, ethoxytris(didecylamino)titanium, butoxytris(didecylamino)titanium, hexyloxytris(didecylamino)titanium, 2-ethylhexyloxytris(didecylamino)titanium, decyloxytris(didecylamino)titanium, methoxytris(dioctadecylamino)titanium, ethoxytris(dioctadecylamino)titanium, butoxytris(dioctadecylamino)titanium, hexyloxytris(dioctadecylamino)titanium, 2-ethylhexyloxytris(dioctadecylamino)titanium, and decyloxytris(dioctadecylamino)titanium.

Among such titanium compounds, those wherein m in the formula is 1 are particularly preferred because they give the highest catalytic activity. Examples of such compounds include tris(dioctylamino)titanium chloride, tris(didecylamino)titanium chloride, tris(dioctadecylamino)titanium chloride, hexyloxybis(dioctylamino)titanium chloride, 2-ethylhexyloxybis(dioctylamino)titanium chloride, decyloxybis(dioctylamino)titanium chloride, hexyloxybis(didecylamino)titanium chloride, 2-ethylhexyloxybis(didecylamino)titanium chloride, decyloxybis(didecylamino)titanium chloride, hexyloxybis(octadecylamino)titanium chloride, 2-ethylhexyloxybis(octadecylamino)titanium chloride, and decyloxybis(octadecylamino)titanium chloride.

When the organometallic compound (A2) is an organoaluminum compound, among such titanium compounds those wherein m in the formula is smaller are more preferred because they yield copolymers having still narrower composition distribution. Examples of such compounds include tetrakis(dimethylamino)titanium, tetrakis(diethylamino)titanium, tetrakis(dipropylamino)titanium, tetrakis(diisopropylamino)titanium, tetrakis(diisobutylamino)titanium, tetrakis(di-tert-butylamino)titanium, tetrakis(dibutylamino)titanium, tetrakis(dihexylamino)titanium, tetrakis(dioctylamino)titanium, tetrakis(didecylamino)titanium, tetrakis(dioctadecyl)titanium, methoxytris(dimethylamino)titanium, ethoxytris(dimethylamino)titanium, butoxytris(dimethylamino)titanium, hexyloxytris(dimethylamino)titanium, 2-ethylhexyloxytris(dimethylamino)titanium, decyloxytris(dimethylamino)titanium, methoxytris(diethylamino)titanium, ethoxytris(diethylamino)titanium, butoxytris(diethylamino)titanium, hexyloxytris(diethylamino)titanium, 2-ethylhexyloxytris(diethylamino)titanium, decyloxytris(diethylamino)titanium, methoxytris(dipropylamino)titanium, ethoxytris(dipropylamino)titanium, butoxytris(dipropylamino)titanium, hexyloxytris(dipropylamino)titanium, 2-ethylhexyloxytris(dipropylamino)titanium, decyloxytris(dipropylamino)titanium, methoxytris(dibutylamino)titanium, ethoxytris(dibutylamino)titanium, butoxytris(dibutylamino)titanium, hexyloxytris(dibutylamino)titanium, 2-ethylhexyloxytris(dibutylamino)titanium, decyloxytris(dibutylamino)titanium, methoxytris(dihexylamino)titanium, ethoxytris(dihexylamino)titanium, butoxytris(dihexylamino)titanium, hexyloxytris(dihexylamino)titanium, 2-ethylhexyloxytris(dihexylamino)titanium, decyloxytris(dihexylamino)titanium, methoxytris(dioctylamino)titanium, ethoxytris(dioctylamino)titanium, butoxytris(dioctylamino)titanium, hexyloxytris(dioctylamino)titanium, 2-ethylhexyloxytris(dioctylamino)titanium, decyloxytris(dioctylamino)titanium, methoxytris(didecylamino)titanium, ethoxytris(didecylamino)titanium, butoxytris(didecylamino)titanium, hexyloxytris(didecylamino)titanium, 2-ethylhexyloxytris(didecylamino)titanium, decyloxytris(didecylamino)titanium, methoxytris(dioctadecylamino)titanium, ethoxytris(dioctadecylamino)titanium, butoxytris(dioctadecylamino)titanium, hexyloxytris(dioctadecylamino)titanium, 2-ethylhexyloxytris(dioctadecylamino)titanium, and decyloxytris(dioctadecylamino)titanium.

Such titanium compounds (A1) may be synthesized, for example, by using the methods described in JP-B-41-5397; JP-B-42-11646; H. Burger et al., J. of Organomet. Chem., 108 (1976), 69-84; H. Burger et al., J. of Organomet. Chem., 20 (1969), 129-139; and H. Burger, Z. Anorg. Allg. Chem., 365, 243-254 (1991).

The titanium compounds may be synthesized, according to the aforesaid methods, for example, by reacting (i) a secondary amine represented by the formula $R^{11}R^{12}NH$, wherein $R^{11}$ and $R^{12}$ each denote a hydrocarbon group having 1-30 carbon atoms and may be the same or different, with (ii) an alkylalkali metal represented by the formula $R^{13}M$, wherein $R^{13}$ denotes a hydrocarbon group having 1-30 carbon atoms and M denotes an alkali metal such as Li and K, and then reacting the resulting alkali metal amide with a titanium tetrahalide represented by the formula $TiX_4$, wherein X denotes a halogen, such as chlorine, bromine, or iodine, preferably chlorine.

In the above synthesis, two or more alkali metal amides may be used simultaneously in combination.

The organomagnesium compound used in the present invention may be any type of organomagnesium compound which contains a magnesium-carbon bond. Examples of the organomagnesium compound (A2) include organomagnesium compounds represented by the formula $R^3R^4Mg$, wherein $R^3$ and $R^4$ each denote a hydrocarbon group having 1-20 carbon atoms, the formula $R^5MgZ^1$, wherein $R^5$ denotes a hydrocarbon group having 1-20 carbon atoms, and $Z^1$ denotes a hydrogen atom or alkoxy group, and the formula $R^6MgX$, wherein $R^6$ denotes a hydrocarbon group having 1-20 carbon atoms and X denotes a halogen. In the above formulas, $R^3$, $R^4$, $R^5$ and $R^6$ may be the same or different and each denote an alkyl group, aryl group, aralkyl group or alkenyl group each having 1-20 carbon atoms, e.g., methyl, ethyl, propyl, isopropyl, butyl, sec-butyl, tert-butyl, amyl, isoamyl, hexyl, octyl, 2-ethylhexyl, phenyl, benzyl, vinyl, 1-propenyl and 2-propenyl.

Specific examples of the compounds represented by the formula $R^3R^4Mg$ include dimethylmagnesium, diethylmagnesium, dipropylmagnesium, diisopropylmagnesium, dibutylmagnesium, diisobutylmagnesium, di-sec-butylmagnesium, di-tert-butylmagnesium, diamylmagnesium, dineopentylmagnesium, dihexylmagnesium, dicyclohexylmagnesium, diphenylmagnesium, dibenzylmagnesium, divinylmagnesium, di-2-propenylmagnesium, di-2-butenylmagnesium, bis(trimethylsilylmethyl)magnesium, methylethylmagnesium, methylpropylmagnesium, methylisopropylmagnesium, methylbutylmagnesium, methylisobutylmagnesium, methyl-sec-butylmagnesium, methyl-tert-butylmagnesium, methylamylmagnesium, methylneopentylmagnesium, methylhexylmagnesium, methylcyclohexylmagnesium, methylphenylmagnesium, methylbenzylmagnesium, methylvinylmagnesium, methyl-2-propenylmagnesium, methyl-2-butenylmagnesium, methyl(trimethylsilylmethyl)magnesium, ethylpropylmagnesium, ethylisopropylmagnesium, ethylbutylmagnesium, ethylisobutylmagnesium, ethyl-sec-butylmagnesium, ethyl-tert-butylmagnesium, ethylamylmagnesium, ethylneopentylmagnesium, ethylhexylmagnesium, ethylcyclohexylmagnesium, ethylphenylmagnesium, ethylbenzylmagnesium, ethylvinylmagnesium, ethyl-2-propenylmagnesium, ethyl-2-butenylmagnesium, ethyl(trimethylsilylmethyl)magnesium, propylisopropylmagnesium, propylbutylmagnesium, propylisobutylmagnesium, propyl-sec-butylmagnesium, propyl-tert-butylmagnesium, propylamylmagnesium, propylneopentylmagnesium, propylhexylmagnesium, propylcyclohexylmagnesium, propylphenylmagnesium, propylbenzylmagnesium, propylvinylmagnesium, propyl-2-propenylmagnesium, propyl-2-butenylmagnesium, propyl(trimethylsilylmethyl)magnesium, isopropylbutylmagnesium, isopropylisobutylmagnesium, isopropyl-sec-butylmagnesium, isopropyl-tert-butylmagnesium, isopropylamylmagnesium, isopropylneopentylmagnezium, isopropylhexylmagnesium, isopropylcyclohexylmagnesium, isopropylphenylmagnesium, isopropylbenzylmagnesium, isopropylvinylmagnesium, isopropyl-2-propenylmagnesium, isopropyl-2-butenylmagnesium, isopropyl(trimethylsilylmethyl)magnesium, butylisobutylmagnesium, butyl-sec-butylmagnesium, butyl-tert-butylmagnesium, butylamylmagnesium, butylneopentylmagnesium, butylhexylmagnesium, butylcyclohexylmagnesium, butylphenylmagnesium, butylbenzylmagnesium, butylvinylmagnesium, butyl-2-propenylmagnesium, butyl-2-butenylmagnesium, butyl(trimethylsilylmethyl)magnesium, isobutyl-sec-butylmagnesium, isobutyl-tert-butylmagnesium, isobutylamylmagnesium, isobutylneopentylmagnesium, isobutylhexylmagnesium, isobutylcyclohexylmagnesium, isobutylphenylmagnesium, isobutylbenzylmagnesium, isobutylvinylmagnesium, isobutyl-2-propenylmagnesium, isobutyl-2-butenylmagnesium, isobutyl(trimethylsilylmethyl)magnesium, sec-butyl-tert-butylmagnesium, sec-butylamylmagnesium, sec-butylneopentylmagnesium, sec-butylhexylmagnesium, sec-butylcyclohexylmagnesium, sec-butylphenylmagnesium, sec-butylbenzylmagnesium, sec-butylvinylmagnesium, sec-butyl-2-propenylmagnesium, sec-butyl-2-butenylmagnesium, sec-butyl(trimethylsilylmethyl)magnesium, tert-butylamylmagnesium, tert-butylneopentylmagnesium, tert-butylhexylmagnesium, tert-butylcyclohexylmagnesium, tert-butylphenylmagnesium, tert-butylbenzylmagnesium, tert-butylvinylmagnesium, tert-butyl-2-propenylmagnesium, tert-butyl-2-butenylmagnesium, tert-butyl(trimethylsilylmethyl)magnesium, amylneopentylmagnesium, amylhexylmagnesium, amylcyclohexylmagnesium, amylphenylmagnesium, amylbenzylmagnesium, amylvinylmagnesium, amyl-2-propenylmagnesium, amyl-2-butenylmagnesium, amyl(trimethylsilylmethyl)magnesium, neopentylhexylmagnesium, neopentylcyclohexylmagnesium, neopentylphenylmagnesium, neopentylbenzylmagnesium, neopentylvinylmagnesium, neopentyl-2-propenylmagnesium, neopentyl-2-butenylmagnesium, neopentyl(trimethylsilylmethyl)magnesium, hexylcyclohexylmagnesium, hexylphenylmagnesium, hexylbenzylmagnesium, hexylvinylmagnesium, hexyl-2-propenylmagnesium, hexyl-2-butenylmagnesium, hexyl(trimethylsilylmethyl)magnesium, cyclohexylphenylmagnesium, cyclohexylbenzylmagnesium, cyclohexylvinylmagnesium, cyclohexyl-2-propenylmagnesium, cyclohexyl-2-butenylmagnesium, cyclohexyl(trimethylsilylmethyl)magnesium, phenylbenzylmagnesium, phenylvinylmagnesium, phenyl-2-propenylmagnesium, phenyl-2-butenylmagnesium, phenyl(trimethylsilylmethyl)magnesium, benzylvinylmagnesium, benzyl-2-propenylmagnesium, benzyl-2-butenylmagnesium, benzyl(trimethylsilylmethyl)magnesium, vinyl-2-propenylmagnesium, vinyl-2-butenylmagnesium, and vinyl(trimethylsilylmethyl)magnesium.

Examples of the compounds represented by the formula $R^5MgZ^1$ include ethylmagnesium hydride, propylmagnesium hydride, isopropylmagnesium hydride, butylmagnesium hydride, sec-butylmagnesium hydride, tert-butylmagnesium hydride, phenylmagnesium hydride, ethylmagnesium methoxide, ethylmagnesium ethoxide, ethylmagnesium propoxide, ethylmagnesium butoxide, ethylmagnesium phenoxide, propylmagnesium methoxide, propylmagnesium ethoxide, propylmagnesium propoxide, propylmagnesium butoxide, propylmagnesium phenoxide, isopropylmagnesium methoxide, isopropylmagnesium ethoxide, isopropylmagnesium propoxide, isopropylmagnesium butoxide, isopropylmagnesium phenoxide, butylmagnesium methoxide, butylmagnesium ethoxide, butylmagnesium propoxide, butylmagnesium butoxide, butylmagnesium phenoxide, sec-butylmagnesium methoxide, sec-butylmagnesium ethoxide, sec-butylmagnesium propoxide, sec-butylmagnesium butoxide, sec-butylmagnesium phenoxide, tert-butylmagnesium methoxide, tert-butylmagnesium ethoxide, tert-butylmagnesium propoxide, tert-butylmagnesium butoxide, tert-butylmagnesium phenoxide, phenylmagnesium methoxide, phenylmagnesium ethoxide, phenylmagnesium propoxide, phenylmagnesium butoxide and phenylmagnesium phenoxide.

Examples of the compounds represented by the formula $R^6MgX$ include methylmagnesium chloride, ethylmagnesium chloride, ethylmagnesium bromide, ethylmagnesium iodide, propylmagnesium chloride, propylmagnesium bromide, butylmagnesium chloride, butylmagnesium bromide, sec-butylmagnesium chloride, sec-butylmagnesium bromide, tert-butylmagnesium chloride, tert-butylmagnesium bromide, amylmagnesiumn chloride, isoamylmagnesium chloride, vinylmagnesium bromide, vinylmagnesium chloride, 1-propenylmagnesium bromide, 1-propenylmagnesium chloride, 2-propenylmagnesium bromide, 2-propenylmagnesium chloride, phenylmagnesium chloride, phenylmagnesium bromide, benzylmagnesium chloride, and benzylmagnesium bromide.

From the viewpoint of the composition distribution of the copolymer formed, the organomagnesium compounds are preferably those which are represented by the formula $R^3R^4Mg$. Among them, those wherein $R^3$ and $R^4$ are each an aliphatic hydrocarbon group are more preferred. Specific examples of such organomagnesium compounds include dimethylmagnesium, diethylmagnesium, dipropylmagnesium, diisopropylmagnesium, dibutylmagnesium, diisobutylmagnesium, di-sec-butylmagnesium, di-tert-butylmagnesium, diamylmagnesium, dineopentylmagnesium, dihexylmagnesium, dicyclohexylmagnesium, methylethylmagnesium, methylpropylmagnesium, methylisopropylmagnesium, methylbutylmagnesium, methylisobutylmagnesium, methyl-sec-butylmagnesium, methyl-tert-butylmagnesium, methylamylmagnesium, methylneopentylmagnesium, methylhexylmagnesium, methylcyclohexylmagnesium, ethylpropylmagnesium, ethylisopropylmagnesium, ethylbutylmagnesium, ethylisobutylmagnesium, ethyl-sec-butylmagnesium, ethyl-tert-butylmagnesium, ethylamylmagnesium, ethylneopentylmagnesium, ethylhexylmagnesium, ethylcyclohexylmagnesium, propylisopropylmagnesium, propylbutylmagnesium, propylisobutylmagnesium, propyl-sec-butylmagnesium, propyl-tert-butylmagnesium, propylamylmagnesium, propylneopentylmagnesium, propylhexylmagnesium, propylcyclohexylmagnesium, isopropylbutylmagnesium, isopropylisobutylmagnesium, isopropyl-sec-butylmagnesium, isopropyl-tert-butylmagnesium, isopropylamylmagnesium, isopropylneopentylmagnesium, isopropylhexylmagnesium, isopropylcyclohexylmagnesium, butylisobutylmagnesium, butyl-sec-butylmagnesium, butyl-tert-butylmagnesium, butylamylmagnesium, butylneopentylmagnesium, butylhexylmagnesium, butylcyclohexylmagnesium, isobutyl-sec-butylmagnesium, isobutyl-tert-butylmagnesium, isobutylamylmagnesium, isobutylneopentylmagnesium, isobutylhexylmagnesium, isobutylcyclohexylmagnesium, sec-butyl-tert-butylmagnesium, sec-butylamylmagnesium, sec-butylneopentylmagnesium, sec-butylhexylmagnesium, sec-butylcyclohexylmagnesium, tert-butylamylmagnesium, tert-butylneopentylmagnesium, tert-butylhexylmagnesium, tert-butylcyclohexylmagnesium, amylneopentylmagnesium, amylhexylmagnesium, amylcyclohexylmagnesium, neopentylhexylmagnesium, neopentylcyclohexylmagnesium, and hexylcyclohexylmagnesium.

In place of the aforesaid organomagnesium compounds, hydrocarbon soluble complexes of the organomagnesium compounds with organometallic compounds may be used. The organometallic compounds may be, for example, organic compounds of Li, Be, B, Al or Zn. Further, the present invention is not limited to the aforesaid compounds.

The organoaluminum compounds (B) used as one component of the catalyst in the present invention may be those known in the art. The organoaluminum compounds (B) may be, for example, organoaluminum compounds (B1) represented by the formula $R^{10}{}_aAlZ^3{}_{3-a}$, and chain-like or cyclic aluminoxanes (B2) having the structure shown by the formula $-[A_\ell(R^{11})-O]_\ell-$. Preferred among the organoaluminum compounds (B) are organoaluminum compounds (B1) represented by the formula $R^{10}{}_aAlZ^3{}_{3-a}$. In the above formulas, $R^{10}$ and $R^{11}$ are each a hydrocarbon group having 1-20 carbon atoms, preferably 1-10 carbon atoms, $Z^3$ denotes a hydrogen atom and/or an alkoxy group, a is a number defined by the equation $0 < a \leqq 3$, and $\ell$ is an integer of 1 or more, preferably 2-30.

Specific examples of the organoaluminum compounds (B1) represented by the formula $R^{10}{}_aAlZ^3{}_{3-a}$ include trialkylaluminums, such as trimethylaluminum, triethylaluminum, triproipylaluminum, triisobutylaluminum, trihexylaluminum, trioctylaluminum, and tridecylaluminum, dialkylaluminum hydrides, such as dimethylaluminum hydride, diethylaluminum hydride, dipropylaluminum hydride, diisobutylaluminum hydride, dihexylaluminum hydride, dioctylaluminum hydride, and didecylaluminum hydride, alkoxyaluminum hydrides, such as methoxymethylaluminum hydride, methoxyethylaluminum hydride, methoxyisobutylaluminum hydride, ethoxyhexylaluminum hydride, ethoxyoctylaluminum hydride, and ethoxydecylaluminum hydride, and alkylaluminum alkoxides, such as dimethylaluminum methoxide, methylaluminum dimethoxide, diethylaluminum methoxide, ethylaluminum dimethoxide, diisobutylaluminum methoxide, isobutylaluminum dimethoxide, dihexylaluminum methoxide, hexylaluminum dimethoxide, dimethylaluminum ethoxide, methylaluminum diethoxide, diethylaluminum ethoxide, ethylaluminum diethoxide, diisobutylaluminum ethoxide, and isobutylaluminum diethoxide.

Preferred of such compounds from the viewpoint of catalytic activity are trialkylaluminums, which are compounds of the formula wherein a is 3, such as trimethylaluminum, triethylaluminum, tripropylaluminum, triisobutylaluminum, trihexylaluminum, and the like. However, the present invention is not limited to the above-mentioned compounds.

Specific examples of aluminoxanes (B2) represented by the formula $-[A\ell(R^{11})-O]_\ell-$ include tetramethyldialuminoxane, tetraethyldialuminoxane, tetrabutyldialuminoxane, tetrahexyldialuminoxane, methylaluminoxane, ethylaluminoxane, butylaluminoxane and hexylaluminoxane. The present invention, however, is not limited to the above-mentioned compounds.

The component (B) may be used in a wide range such as usually 0.01-10,000 moles relative to 1 mole of titanium atom of the component (A), but it is preferably used in the range of 0.05-500 moles, more preferably 0.1-50 moles, relative to 1 mole of titanium atom.

Next, the synthesis of the reaction product (A) in the present invention is described below.

The reaction product (A), namely one of the catalyst components in the present invention, can be prepared by reacting a titanium compound (A1) with an organometallic compound (A2). When the reaction product thus obtained contains a solid, the solid is removed by filtration and the resulting liquid alone is used for polymerization. The use of the solid is not preferable because the solid formed has a very low catalytic activity as compared with the liquid component and further gives copolymers having a wide composition distribution.

The reaction of the titanium compound (A1) with the organometallic compound (A2) may be effected either by adding the organometallic compound (A2) to the titanium compound (A1) or by adding the titanium compound (A1) to the organometallic compound (A2).

The reaction temperature is usually in the range of -50 to 230°C, preferably 0 to 200°C. The reaction time is not particularly restricted, but usually 1 minutes to 2 hours.

The amount of the organometallic compound (A2) used is, in terms of the atomic ratio of the metal in the organometallic compound (A2) to the titanium in the titanium compound (A1), in the range of usually 0.01-100, preferalby 0.05-50, more preferably 0.1-10.

The catalyst components and the catalyst according to the present invention are used for producing ethylene-α-olefin copolymers. Said copolymers herein refer to copolymers formed from ethylene and one or more α-olefin.

Specific examples of the α-olefin include α-olefins having 3-30 carbon atoms, such as propylene, butene-1, pentene-1, hexene-1, 4-methylpentene-1, octene-1, decene-1, octadecene-1, and eicosene-1.

Further, dienes may also be copolymerized in order to improve the vulcanizability of the copolymer. Specific examples of such dienes include 1,3-butadiene, dicyclopentadiene, tricyclopentadiene, 5-methyl-2,5-norbornadiene, 5-methylene-2-norbornene, 5-ethyldiene-2-norbornene, 5-isopropenyl-2-norbornene, 5-(2'-butenyl)-2-norbornene, 1,5,9-cyclododecatriene, 6-methyl-4,7,8,9-tetrahydroindene, trans-1,2-divinylcyclobutane, 1,4-hexadiene, 4-methyl-1,4-hexadiene, 1,3-hexadiene, 1,6-octadiene, and 6-methyl-1,5-heptadiene. The present invention, however, is not to be limited to the above compounds.

The copolymer obtained according to the present invention can have a density in the range of 0.85-0.95 g/cm$^3$, but preferably has a density in the range of 0.88-0.95 g/cm$^3$, more preferably 0.90-0.95 g/cm$^3$.

An example of the process for producing ethylene-α-olefin copolymers using the catalyst components or the catalyst according to the present invention is described below.

The method for feeding the respective catalyst components to the polymerization vessel is subject to no particular restriction except that they should be fed in an inert gas, such as nitrogen or argon, and in the absence of moisture. The catalyst components (A) and (B) may be either fed each individually or fed after having been made to contact with each other in advance.

The polymerization temperature may be usually in the range of -30 to 300°C, but is preferably 0 to 280°C, more preferably 20 to 250°C.

The polymerization pressure is not particularly restricted, but preferably about 3-1500 atm from the viewpoint of industrial practicality and economical efficiency.

The polymerization can be conducted either continuously or batchwise. It may be slurry or solution polymerization which use an inert hydrocarbon solvent, such as propane, butane, pentane, hexane, and octane, or liquid phase or gas phase polymerization which use no solvent.

Further, a chain transfer agent, such as hydrogen, may be added to the polymerization system in order to control the molecular weight of the copolymer of the present invention.

According to the present invention, a catalyst having a high catalytic activity per unit weight of transistion metal is obtained, whereby productivity can be improved and further the production of ethylene-α-olefin copolymers having a high molecular weight and narrow composition distribution becomes possible; thus, ethylene-α-olefin copolymers excellent in weather resistance, color development, transparency, corrosiveness, and mechanical properties can be provided.

The present invention will be described further in detail below with reference to Examples and Comparative Examples.

The polymer properties described in Examples were determined by the following methods.

The α-olefin content was determined from the characteristic absorptions of ethylene and α-olefin measured by using an infrared spectrophotometer (JASCO-302, mfd. by NIPPON BUNKO KOGYO CO.).

The intrinsic viscosity [η] was determined by using an Ubbeelohde's viscometer in tetralin solution at 135°C.

As the measure for representing composition distribution, an average melting point $\langle Tm \rangle$ defined by the following equation was determined by using a differential scanning colorimeter (DSC). The smaller $\langle Tm \rangle$ value indicates the narrower composition distribution.

$$\langle Tm \rangle = \frac{\Sigma(Hi \times ti)}{\Sigma Hi}$$

wherein 50°C < ti < 120°C, and Hi denotes the melting energy (w/g) at temperature ti.

Example 1

(1) Synthesis of reaction product (A)

Synthesis of titanium compound (A1):

A 300-ml flask equipped with a stirrer, dropping funnel and thermometer was purged with argon gas, and 18.1 ml (60 mmols) of dioctylamine and 150 ml of hexane were charged therein.

Then, 38.7 ml (60 mmols) of n-butyllithium diluted with hexane was added dropwise from the dropping funnel over a period of 30 minutes with stirring while keeping the temperature of the solution in the flask at 5°C. After completion of the addition, the reaction was further conducted at 5°C for 2 hours and at 30°C for 2 hours.

Then, 2.2 ml (20 mmols) of $TiCl_4$ diluted with hexane was added dropwise from the dropping funnel to the liquid mixture obtained by the above reaction over a period of 30 minutes while keeping the temperature of the liquid mixture at 5°C. After completion of the addition, the reaction was further continued at 5°C for 1 hour and at 30°C for 2 hours, to obtain 20 mmols (as 100% yield) of a titanium compound (A-1) represented by the composition formula $[(C_8H_{17})_2N]_3TiCl$.

Reaction of titanium compound (A1) with organometallic compound (A2):

To the reaction product obtained above was added 30 ml (19.8 mmols) of butylethylmagnesium (hereinafter abbreviated as BEM) (mfd. by Tosoh-Akzo Co.) diluted with heptane, and the resulting mixture was allowed to react for 1 hour while keeping the temperature at 30°C, to obtain 20 mmols of a reaction product (A) (hereinafter called "component (A)"). (catalyst concentration: 0.077 mmol Ti/ml).

(2) Polymerization of ethylene

An autoclave of 400-ml inner volume equipped with a stirrer and a thermometer was dried under vacuum and purged with argon gas. Then, 100 ml of toluene as a solvent and 800 mmols of hexene-1 as an $\alpha$-olefin were charged therein, and the reactor was heated up to 180°C. Thereafter, ethylene was fed into the reactor while adjusting the ethylene pressure to 25 kg/cm$^2$ (1 kg/cm$^2$ = 0.981 bar). After the reaction system had become stable, 0.1 mmol of triethylaluminum (hereinafter abbreviated as TEA) was fed as the orgnaoaluminum compound (B) and succeedingly 0.063 mmol of the component (A) synthesized in (1) above was fed into the reactor. Then polymerization was conducted for 2 minutes while controlling the temperature at 180°C. As the result of the polymerization, 47,000 g of copolymer was obtained per 1 mol of transition metal (activity: 47,000 g-coplymer/mol. M). The results are shown in Table 1. The melting behavior of the copolymer obtained was determined with a DSC and the resulting diagram is shown in Fig. 1. In Fig. 1, the numbers on the abscissa indicate the temperature (°C) and those on the ordinate indicate the melting energy (mW). In Fig. 1, as the melting peak is recognized at the lower temperature side, the composition distribution tends to be the narrower. The composition distribution of the copolymer obtained was shown to be very narrow.

Example 2

A reaction product was synthesized in the same manner as in the synthesis of the reaction product (A) of Example 1(1) except that dihexylmagnesium (abbreviated as DHM)(made by Tosoh-Akzo Co.) was used in place of BEM, and then ethylene was polymerized in the same manner as in Example 1 except that the reaction product obtained above was used in place of the reaction product (A) of Example 1. The results are shown in Table 1. A polymer having a narrow composition distribution was obtained as in Example 1.

Example 3

Polymerization of ethylene

An autoclave of 400-ml inner volume equipped with a stirrer and a thermometer was dried under vacuum and purged with argon gas. Then, 82 g of butane as a solvent and 321 mmols of butene-1 as an α-olefin were charged therein, and the reactor was heated up to 70°C. Thereafter, hydrogen and ethylene were fed into the reactor while adjusting the hydrogen pressure to 1.0 $kg/cm^2$ and the ethylene pressure to 6.0 $kg/cm^2$. After the reaction system had become stable, 0.25 mmol of TEA was fed as the organoaluminum compound (B), and succeedingly 0.16 mmol of the component (A) synthesized in Example 1(1) was fed into the reactor. Then, polymerization was conducted for 60 minutes while controlling the temperature at 70°C. The results are shown in Table 1. A polymer having a narrow composition distribution was obtained as in Example 1 (see Fig. 2).

Comparative Example 1

Ethylene was polymerized in the same manner as in Example 3 except that 0.16 mmol of a titanium compound (A1) represented by the composition formula $[(C_8H_{17})_2N]_3TiCl$ was used in the polymerization in place of the component (A). The results are shown in Table 1. The results of polymerization showed that the catalytic activity was low and the polymer obtained had a wide composition distribution (see Fig. 3).

Example 4

(1) Synthesis of reaction product (A)

Synthesis of titanium compound (A1):

A 300-ml flask equipped with a stirrer, dropping funnel and thermometer was purged with argon gas, and then 6.3 ml (60 mmols) of diethylamine and 150 ml of hexane were charged therein.

Then, 38.7 ml (60 mmols) of n-butyllithium diluted with hexane was added dropwise from the dropping funnel over a period of 30 minutes while keeping the temperature of the solution in the flask at 5°C. After completion of the addition, the reaction was further conducted at 5°C for 2 hours and at 30°C for 2 hours.

Subsequently, 3.3 ml (30 mmols) of $TiCl_4$ diluted with hexane was added dropwise from the dropping funnel to the liquid mixture obtained by the above reaction over a period of 30 minutes while keeping the temperature at 5°C. After completion of the addition, the reaction was further conducted at 5°C for 1 hour and at 30°C for 2 hours, to obtain 30 mmols (as 100% yield) of a titanium compound (A1) represented by the composition formula $[(C_2H_5)_2N]_2TiCl_2$.

Reaction of titanium compound (A1) with organomagnesium compound (A2):

To the reaction product obtained above was added 45.5 ml (30 mmols) of butylethylmagnesium (BEM) (mfd. by Tosoh-Akzo Co.) diluted with heptane, and the resulting mixture was allowed to react for 1 hour while keeping the temperature at 30°C, to obtain 21.2 mmols of a reaction product (A) (catalyst concentration 0.112 mmol Ti/ml).

(2) Polymerization of ethylene

Polymerization was conducted in the same manner as in Example 1(2) except that 0.063 mmol of the component (A) synthesized in (1) above was used as the reaction product (A) and 0.1 mmol of triisobutylaluminum (abbreviated as TIBA) was used as the organoaluminum compound (B). The results are shown in Table 1. A polymer having a narrow composition distribution was obtained as in Example 1.

Comparative Example 2

Polymerization was conducted in the same manner as in Example 4 except that 0.063 mmol of a titanium compound represented by the composition formula $[(C_2H_5)_2N]_2TiCl_2$ was added in place of the component (A) used in ethylene polymerization of Example 4(2). The results are shown in Table 1. The result of polymerization showed a very low activity of the catalyst.

Example 5

Polymerization was conducted in the same manner as in Example 1 except that 0.1 mmol of trihexylaluminum (abbreviated as THA) was added as the organoaluminum compond in place of TEA used in ethylene polymerization of Example 1(2). The results of polymerization are shown in Table 1. A polymer having also a narrow composition distribution was obtained as in Example 1.

Example 6

A reaction product was prepared in the same manner as in Example 3 except that MAGALA 7.5E (a trade name, composition formula: $7.5(n\text{-}C_4H_9)_2Mg \cdot (C_2H_5)Al$, mfd. by Tosoh-Akzo Co.) was used in place of BEM used in the synthesis of the reaction product (A) of Example 1(1), and then ethylene was polymerized in the same manner as in Example 3 except that the reaction product prepared above was used. The results are shown in Table 1. The polymerization yielded a polymer having a narrow composition distribution as in Example 3.

Table 1

| | Reaction product (A) | | Organo-aluminum compound (B) | Polymerization temp. (°C) | Activity (g-Coplymer / mol. M) | *1) Comonomer content (wt.%) | [η] | <Tm> (°C) |
|---|---|---|---|---|---|---|---|---|
| | Titanium compound | *2) Organo-magnesium compound | | | | | | |
| Example 1 | $[(C_8H_{17})_2N]_3TiCl$ | BEM | TEA | 180 | 47000 | 10.4 | 0.55 | 98.4 |
| Example 2 | " | DHM | " | " | 23000 | 9.2 | 0.63 | 98.5 |
| Example 3 | " | BEM | " | 70 | 68000 | 10.0 | 1.53 | 94.4 |
| Comp. Example 1 | " | — | " | " | 9200 | 7.6 | 2.75 | 103.8 |
| Example 4 | $[(C_2H_5)_2N]_2TiCl_2$ | BEM | TIBA | 180 | 6300 | 6.6 | 0.66 | 98.7 |
| Comp. Example 2 | " | — | " | " | 940 | — | — | — |
| Example 5 | $[(C_8H_{17})_2N]_3TiCl$ | BEM | THA | " | 43000 | 10.9 | 0.60 | 97.9 |
| Example 6 | " | 7.5E | TEA | 70 | 36000 | 8.8 | 1.51 | 99.6 |

Note: *1) Comonomer is hexene-1, except for butene-1 in Examples 3 and 6 and Comparative Example 1.

*2) BEM: $(n-C_4H_9)Mg(C_2H_5)$ DHM: $(n-C_6H_{13})_2Mg$ 7.5E: $7.5(n-C_4H_9)_2Mg \cdot (C_2H_5)_3Al$

TEA: $(C_2H_5)_3Al$ THA: $(n-C_6H_{13})_3Al$ TIBA: $[(CH_3)_2CHCH_2]_3Al$.

Example 7

(1) Synthesis of reaction product (A)

A reaction product (A) was synthesized in the same manner as in Example 1 except that 12.0 ml of a 1.67 mol/ℓ hexane solution of n-butyllithium was used in place of BEM diluted with heptane used in the synthesis of the reaction product (A) of Example 1(1), to obtain 20 mmols of the reaction product (A) (catalyst concentration: 0.087 mmolTi/ml).

(2) Copolymerization of ethylene with butene-1

An autoclave of 3000-ml inner volume equipped with a stirrer and a thermometer was dried under vacuum and purged with argon gas. Then, hydrogen to a pressure of 300 mmHg, 765 g of butane as a solvent and 140 g of butene-1 as an $\alpha$-olefin were charged into the reactor, and the reactor was heated up to 70°C. Thereafter, ethylene was fed to the reactor while adjusting the ethylene pressure to 6 $kg/cm^2$. After the reaction system had become stable, 1.6 mmols of triethylaluminum (TEA) was fed as the organoaluminum compound (B), succeedingly 0.39 mmol of the component (A) synthesized in (1) above was fed into the reactor, and polymerization was conducted for 2 hours while controlling the temperature at 70°C. As the result of the polymerization, 30.0 g of a copolymer was obtained (activity: 76,900 g-coplymer/mol • Ti • hr). The results are shown in Table 2. The melt index of the copolymer obtained was determined according to JIS K-6760 at 190°C. The melting behavior of the copolymer was determined with a DSC and the resulting diagram is shown in Fig. 4. In Fig. 4, the numbers on the abscissa indicate the temperature (°C), and those on the ordinate indicate the melting energy. In Fig. 4, as the melting peak is recognized at the lower temperature side, the composition distribution tends to be the narrower. The composition distribution of the copolymer obtained was shown to be very narrow.

Example 8

Copolymerization of ethylene with butene-1 was conducted in the same manner as in Example 7 except that 20 mmols of sec-butyllithium was used in place of n-BuLi in the synthesis of the component (A), and the component (A) thus obtained was used in the copolymerization. As result, 21.0 g of a copolymer was obtained (activity: 53,900). The results thus obtained are shown in Table 2 and Fig. 5.

Table 2

| | Reaction product (A) | | Organo-aluminum compound | Activity | Comonomer content (wt. %) | MI | <Tm> |
|---|---|---|---|---|---|---|---|
| | Titanium compound | Organo-magnesium compound | (B) | g-polymer / mol•Ti•hr | | | (°C) |
| Example 7 | $[(C_8H_{17})_2N]_3TiCl$ | n-BuLi | TEA | 76,900 | 8.6 | 5.8 | 95.1 |
| Example 8 | $[(C_8H_{17})_2N]_3TiCl$ | sec-BuLi | TEA | 53,900 | 7.9 | 4.9 | 95.6 |

## Claims

1. A catalyst for copolymerizing ethylene with an $\alpha$-olefin comprising a reaction product (A) of a titanium compound (A1) having at least one titanium-nitrogen bond with an organomagnesium compound (A2) and an organoaluminum compound (B), said reaction product (A) being in the form of a liquid.

2. The catalyst according to claim 1 wherein the titanium compound (A1) having at least one titanium-nitrogen bond is one which is represented by the formula $(R^1R^2N)_{4-(m-n)}TiX_mY_n$, wherein $R^1$ and $R^2$ each denote a hydrocarbon group having 1-30 carbon atoms and may be the same or different, X denotes a halogen, Y denotes an alkoxy group, and m and n are numbers respectively defined by he equations $0 \leqq m \leqq 3$ and $0 \leqq n < 3$, provided that (m+n) is defined by the equation $0 \leqq (m+n) \leqq 3$.

3. The catalyst according to claim 1, wherein the organomagnesium compound is at least one organomagnesium compound selected from the group consisting of compounds represented by the following formulas:

   (1) $R^3R^4Mg$, wherein $R^3$ and $R^4$ each denote a hydrocarbon group having 1-20 carbon atoms and may be the same or different,
   (2) $R^5MgZ^1$, wherein $R^5$ denotes a hydrocarbon group having 1-20 carbon atoms and $Z^1$ denotes a hydrogen atom or an alkoxy group,
   (3) $R^6MgX$, wherein $R^6$ denotes a hydrocarbon group having 1-20 carbon atoms and X denotes a halogen.

4. The catalyst according to claim 1, wherein the organoaluminum compound (B) is an organoaluminum compound (B1) represented by the formula $R^{10}{}_aAlZ^3{}_{3-a}$, wherein $R^{10}$ denotes a hydrocarbon group having 1-20 carbon atoms, $Z^3$ denotes a hydrogen atom and/or an alkoxy group, and a denotes a number defined by the equation $0 < a \leqq 3$.

5. Use of a catalyst according to anyone of claims 1 to 4 for producing ethylene-$\alpha$-olefin copolymers.

## Patentansprüche

1. Katalysator zur Copolymerisation von Ethylen mit einem $\alpha$-Olefin, umfassend ein Reaktionsprodukt (A) einer Titanverbindung (A1) mit mindestens einer Titan-Stickstoff-Bindung mit einer Organomagnesiumverbindung (A2) und eine Organoaluminiumverbindung (B), wobei das Reaktionsprodukt (A) in flüssiger Form vorliegt.

2. Katalysator nach Anspruch 1, wobei die Titanverbindung (A1) eine Verbindung mit mindestens einer Titan-Stickstoff-Bindung ist, die durch die Formel $(R^1R^2N)_{4-(m+n)}TiX_mY_n$ wiedergegeben ist, wobei $R^1$ und $R^2$ jeweils einen Kohlenwasserstoffrest mit 1-30 Kohlenstoffatomen bedeuten, der gleich oder verschieden sein kann, X ein Halogenatom bedeutet, Y einen Alkoxyrest bedeutet, und m und n jeweils Zahlen bedeuten, die durch die Gleichungen $0 \leqq m \leqq 3$ und $0 \leqq n < 3$ definiert sind, mit der Maßgabe, daß (m+n) durch die Gleichung $0 \leqq (m+n) \leqq 3$ definiert ist.

3. Katalysator nach Anspruch 1, wobei die Organomagnesiumverbindung mindestens eine Organomagnesiumverbindung ist, ausgewählt aus Verbindungen der nachstehenden Formeln:

   (1) $R^3R^4Mg$, wobei $R^3$ und $R^4$ jeweils einen Kohlenwasserstoffrest mit 1-20 Kohlenstoffatomen bedeuten, der gleich oder verschieden sein kann,
   (2) $R^5MgZ^1$, wobei $R^5$ einen Kohlenwasserstoffrest mit 1-20 Kohlenstoffatomen bedeutet und $Z^1$ ein Wasserstoffatom oder einen Alkoxyrest bedeutet,
   (3) $R^6MgX$, wobei $R^6$ einen Kohlenwasserstoffrest mit 1-20 Kohlenstoffatomen bedeutet und X ein Halogenatom bedeutet.

4. Katalysator nach Anspruch 1, wobei die Organoaluminiumverbindung (B) eine Organoaluminiumverbindung (B1) der Formel $R^{10}{}_aAlZ^3{}_{3-a}$, in der $R^{10}$ einen Kohlenwasserstoffrest mit 1-20 Kohlenstoffatomen bedeutet, $Z^3$ ein Wasserstoffatom und/oder einen Alkoxyrest bedeutet, und a eine Zahl, definiert durch die Gleichung $0 < a \leqq 3$, ist.

5. Verwendung eines Katalysators nach einem der Ansprüche 1 bis 4 zur Herstellung von Ethylen-$\alpha$-Olefin-Copolymerisaten.

## Revendications

1. Catalyseur pour copolymériser de l'éthylène avec une $\alpha$-oléfine, comprenant un produit de réaction (A) d'un composé du titane (A1) ayant au moins une liaison titane-azote avec un composé organomagnésien (A2) et un composé organoaluminique (B), ledit produit de réaction (A) étant sous la forme d'un liquide.

2. Catalyseur selon la revendication 1, dans lequel le composé du titane (A1) ayant au moins une liaison titane-azote est un composé qui est représenté par la formule $(R^1R^2N)_{4-(m+n)}TiX_mY_n$, où $R^1$ et $R^2$ représentent chacun un groupe hydrocarboné ayant 1 à 30 atomes de carbone et peuvent être identiques ou différents, X représente un halogène, Y représente un groupe alcoxy, et m et n sont des nombres définis respectivement par les équations $0 \leq m \leq 3$ et $0 \leq n < 3$, à condition que (m+n) soit défini par l'équation $0 \leq (m+n) \leq 3$ .

3. Catalyseur selon la revendication 1, dans lequel le composé organomagnésien est au moins un composé organomagnésien choisi dans le groupe constitué par les composés représentés par les formules suivantes :

   (1) $R^3R^4Mg$, où $R^3$ et $R^4$ représentent chacun un groupe hydrocarboné ayant 1 à 20 atomes de carbone et peuvent être identiques ou différents,
   (2) $R^5MgZ^1$, où $R^5$ représente un groupe hydrocarboné ayant 1 à 20 atomes de carbone et $Z^1$ représente un atome d'hydrogène ou un groupe alcoxy,
   (3) $R^6MgX$, où $R^6$ représente un groupe hydrocarboné ayant 1 à 20 atomes de carbone et X représente un halogène.

4. Catalyseur selon la revendication 1, dans lequel le composé organoaluminique (B) est un composé organoaluminique (B1) représenté par la formule $R^{10}_aAlZ^3_{3-a}$, où $R^{10}$ représente un groupe hydrocarboné ayant 1 à 20 atomes de carbone, $Z^3$ représente un atome d'hydrogène et/ou un groupe alcoxy, et a représente un nombre défini par l'équation $0 < a \leq 3$.

5. Utilisation d'un catalyseur selon l'une quelconque des revendications 1 à 4, pour produire des copolymères éthylène-$\alpha$-oléfine.

FIG. 1

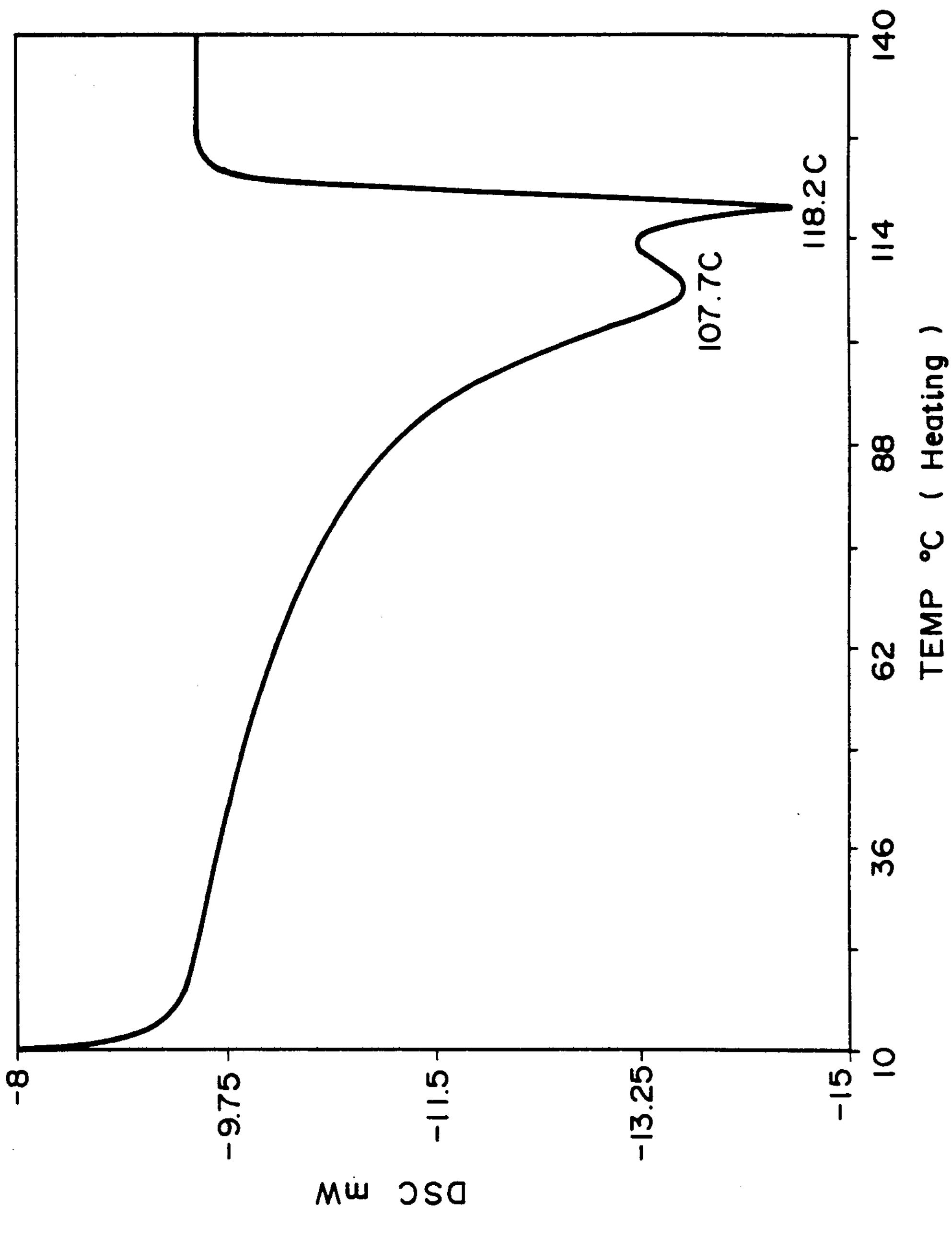

-8
-9.75
-11.5
-13.25
-15
DSC mW
10
36
62
88
114
140
TEMP °C ( Heating )
107.7C
118.2C

FIG. 2

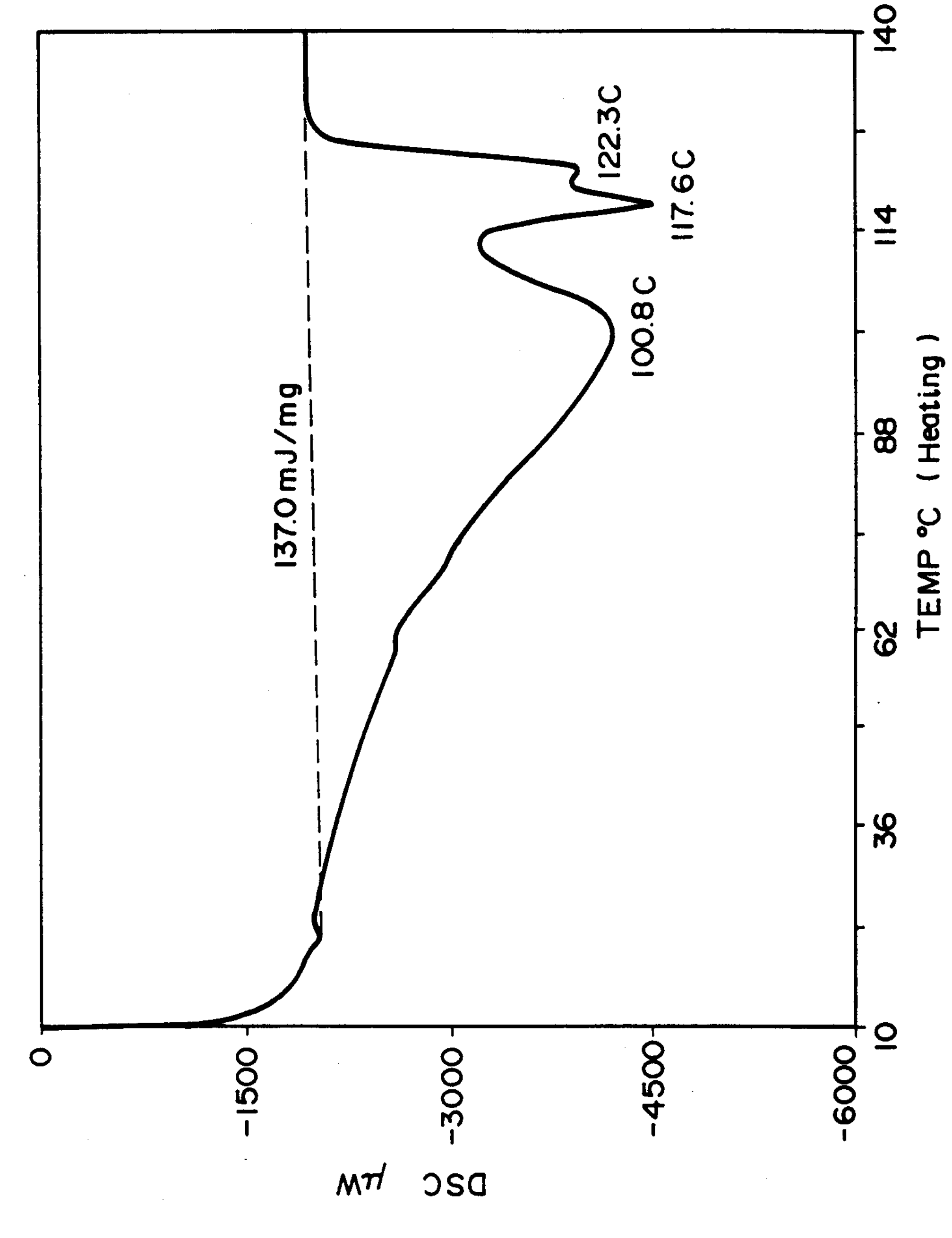
DSC μW
0
-1500
-3000
-4500
-6000
10
36
62
88
114
140
TEMP °C (Heating)
137.0 mJ/mg
100.8 C
117.6 C
122.3 C

FIG. 3

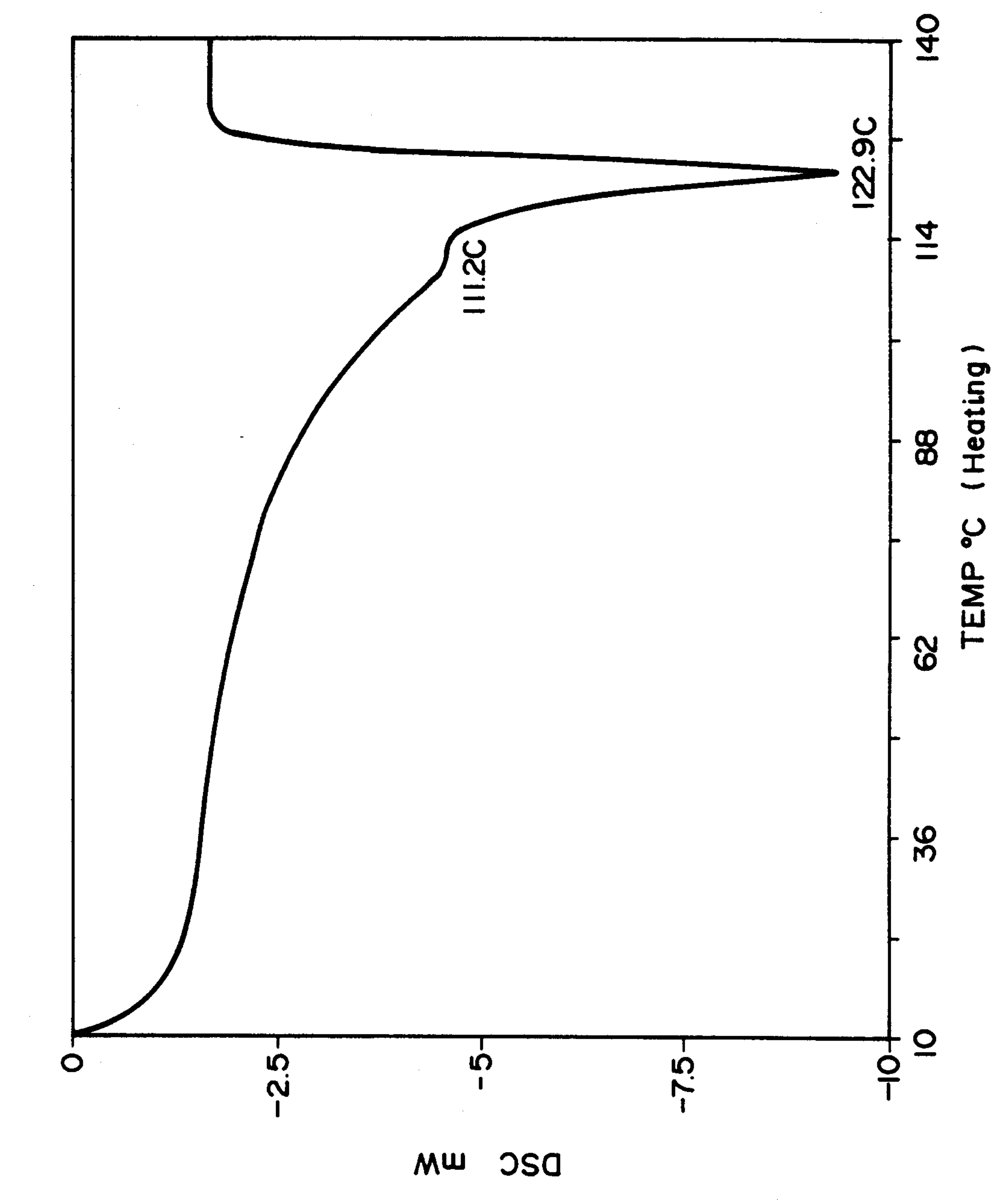

FIG. 4

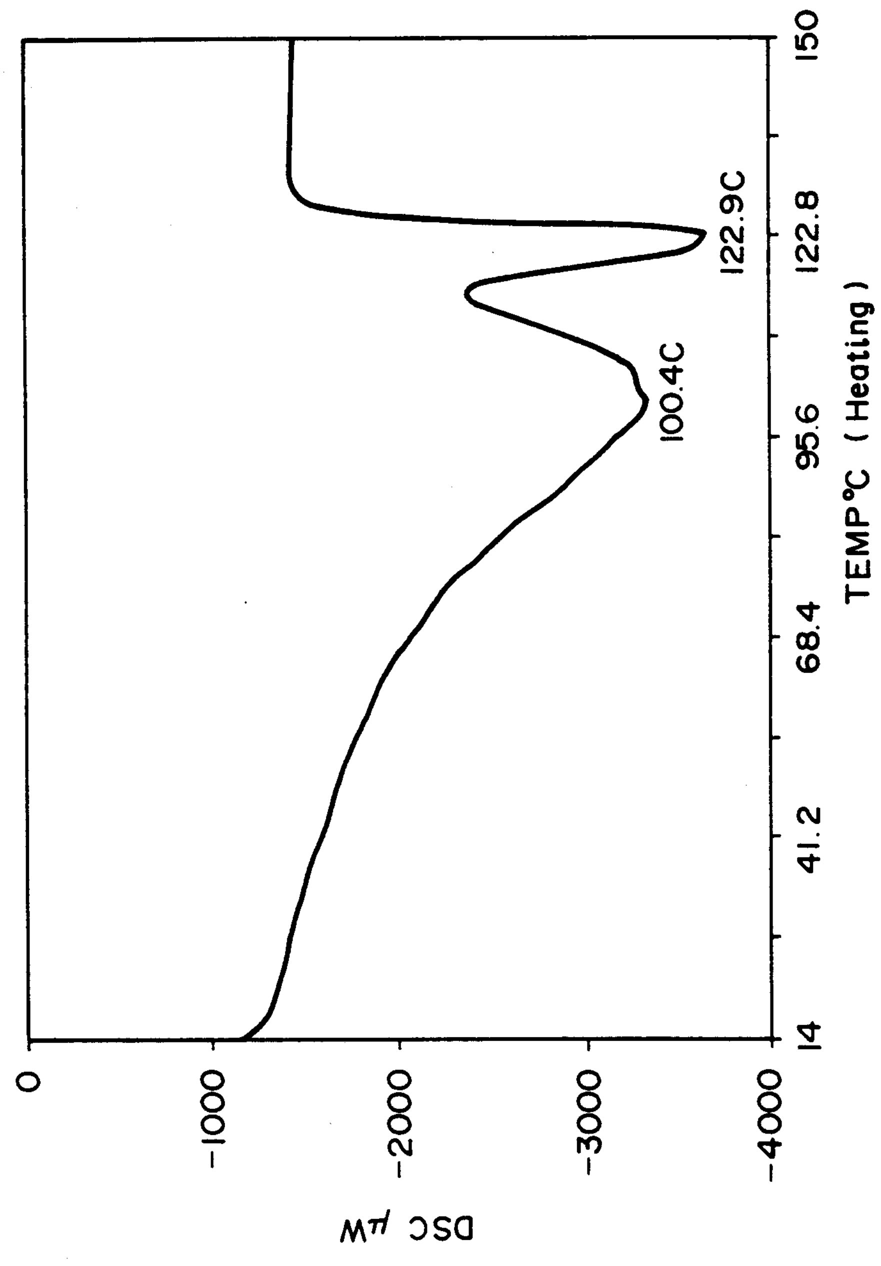
0
-1000
-2000
-3000
-4000
DSC µW
14
41.2
68.4
95.6
122.8
150
TEMP°C (Heating)
100.4C
122.9C

FIG. 5

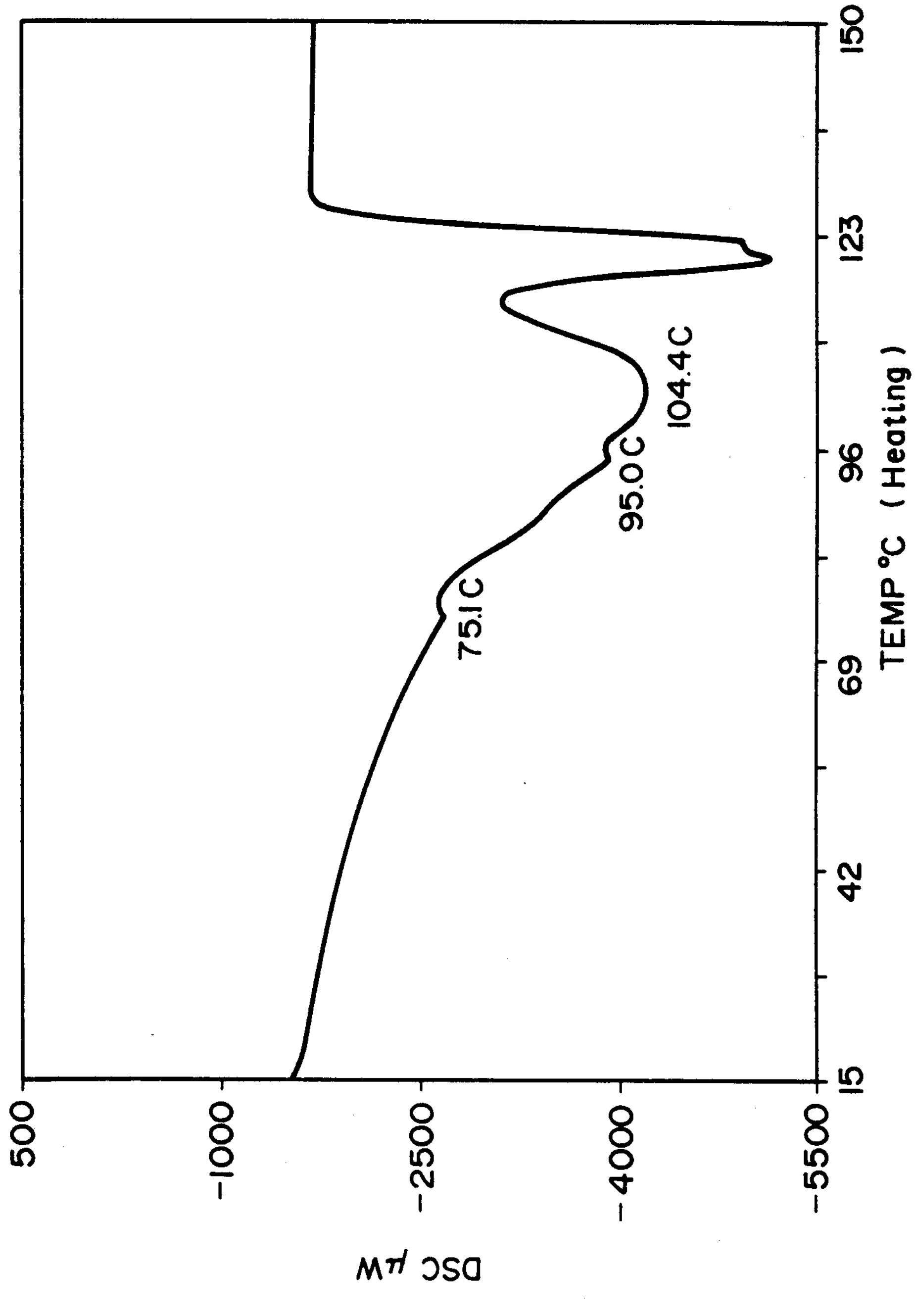

500
-1000
-2500
-4000
-5500
DSC μW
15
42
69
96
123
150
TEMP °C (Heating)
75.1C
95.0C
104.4C

FIG. 6

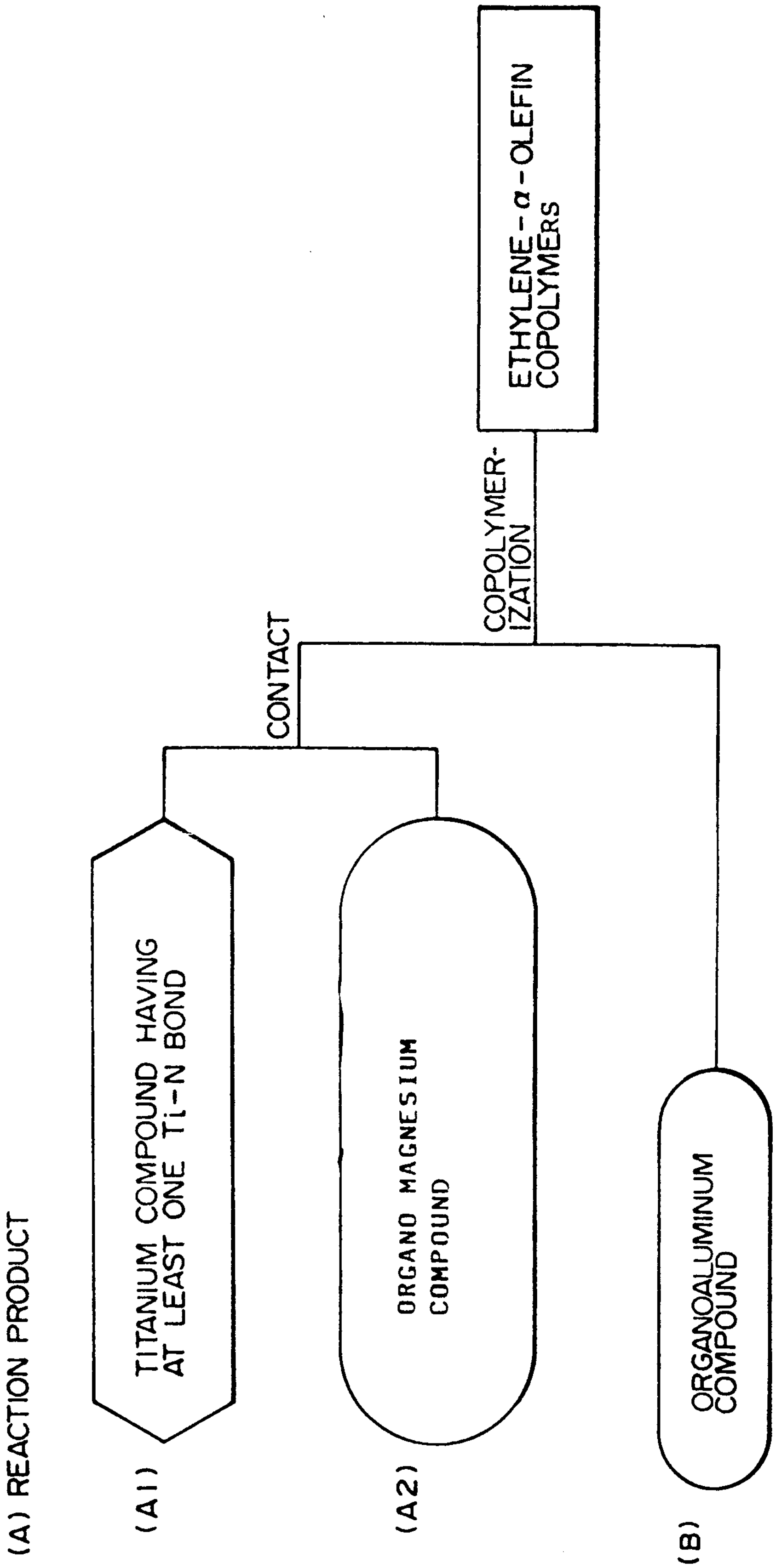
(A) REACTION PRODUCT
(A1)
TITANIUM COMPOUND HAVING AT LEAST ONE Ti-N BOND
(A2)
ORGANO MAGNESIUM COMPOUND
CONTACT
(B)
ORGANOALUMINUM COMPOUND
COPOLYMER-IZATION
ETHYLENE-α-OLEFIN COPOLYMERS